# EUROPEAN PATENT APPLICATION

(11) **EP 1 983 507 A1**
(43) Date of publication of application: **22.10.2008**
(21) Application number: 07741378.9
(22) Date of filing: 11.04.2007
(51) Int. Cl.: G09G 3/36, G02F 1/133, G09G 3/20, H04N 9/31

(54) **IMAGE DISPLAY DEVICE**

(30) Priority: 11.04.2006 JP 2006108427
(71) Applicant: Matsushita Electric Industrial Co., Ltd., Kadoma-shi Osaka 571-8501 (JP)
(72) Inventor: KITAO, Satoshi, c/o Matsushita El. Ind. Co., Ltd., IPROC, Chuo-ku, Osaka-shi, Osaka 540-6207 (JP)
(74) Representative: Pautex Schneider, Nicole Véronique
(86) International application number: PCT/JP2007/057942
(87) International publication number: WO 2007/119731

(57) **Abstract**

An image display device gives a difference in luminance between subframes when dividing a frame into the subframes. Further, a magnification to be applied to one of an R signal, a G signal, and a B signal having the maxim signal level is also applied to the other signals. Thus, an image display device causing no color deviation between the subframes can be provided.

## Description

### TECHNICAL FIELD

The present invention relates to an image display device using a new device, such as a liquid crystal panel. Such image display devices include a television, a display, and a projection type video projector.

### BACKGROUND ART

In a cathode ray tube (hereinafter abbreviated as "CRT") often for use in an image display device, an electron beam hits the fluorescent screen to emit light. When the light emission is measured in a micro period of time, each point on the screen is displayed only for an extremely short period of time made of the persistence of the fluorescent materials. In the CRT, sequentially scanning these spot light emissions allows display of one frame of image, using the effect of persistence of vision. Such a display element as a CRT is called an impulse type.

On the other hand, in recent years, a liquid crystal (LC) display device using an LC panel has had a growing demand not only as a monitor for a personal computer but also as television applications. This growing demand is increasing the chances of displaying moving images. However, for the quality of moving images, the LC display device has problems about display performance, such as perception of moving blurs.

The moving blurs are a problem related to the response characteristics of the LC material itself, and result from the method of continuously providing the same display during one frame period (so called a hold-type display method). In other words, in the LC display device, a display data is generally written into the pixels arranged in a matrix once every frame using data lines (source lines) and address lines (gate lines). Each pixel holds the display data during a period of one frame. In other words, an image is always displayed in the LC display device even when measurement is made in a period shorter than one frame period.

Now, a frame to be described below includes image signals in a period in which all the pixels constituting one image are scanned in a display device. For example, in a display device for displaying an image by scanning all the pixels constituting an image in each field of a television signal, one field of the television signal is equal to one frame to be described in this specification. Therefore, the one frame to be described below is not necessarily equal to the frame generally used for a television signal.

A subframe in this specification includes image signals in each of the scan periods when a frame is further divided into a plurality of scan periods. For example, when interlace-to-progressive conversion (IP conversion) is performed on an interlace image signal having a frequency of 60 Hz in an image display device so that the converted image signal can be displayed on an LC panel or the like, the converted signal provides 60 frames per second. When one frame is further divided into two frames to provide new frames having a frequency of 120 Hz, the new frame is referred to as a subframe of the original frame having a frequency of 60 Hz.

Such a hold-type image display device causes a visual phenomenon of blurs in the contours of a moving image. Non-Patent Document 1, for example, describes the principle of occurrence of the phenomenon and proposes the method of improving the phenomenon. Non-Patent Document 1 shows that setting the display period of the frame equal to or shorter than a half of one frame period can considerably improve the display quality level of a moving image.

Another method of solving the problem caused by the fact that the LC display device is a hold-type display device is to achieve the effect equivalent to impulse driving of CRTs in the LC display device in a pseudo manner. In this method, for example, the sequential field display information in an image signal is written on the LC panel for a period sufficiently shorter than one field period, and the fluorescent lamp is turned on in a part of the time interval in which the image signal is not written and turned off in a part of the time interval in which the image signal is written. This method is described in Patent Document 1, for example.

Still another method allows display approximating that provided by impulse driving in a pseudo manner. In this method, after an image signal is IP-converted into a signal displayable on an LC panel or the like in an image device, the frame is further divided into two subframes and different gamma corrections are made to the respective subframes so that the luminance information is biased on one of the subframes. This method is described in Non-Patent Document 2, for example.

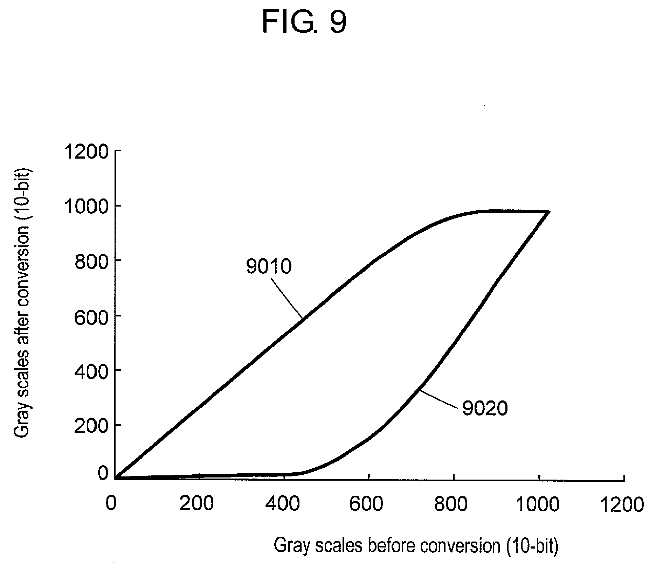

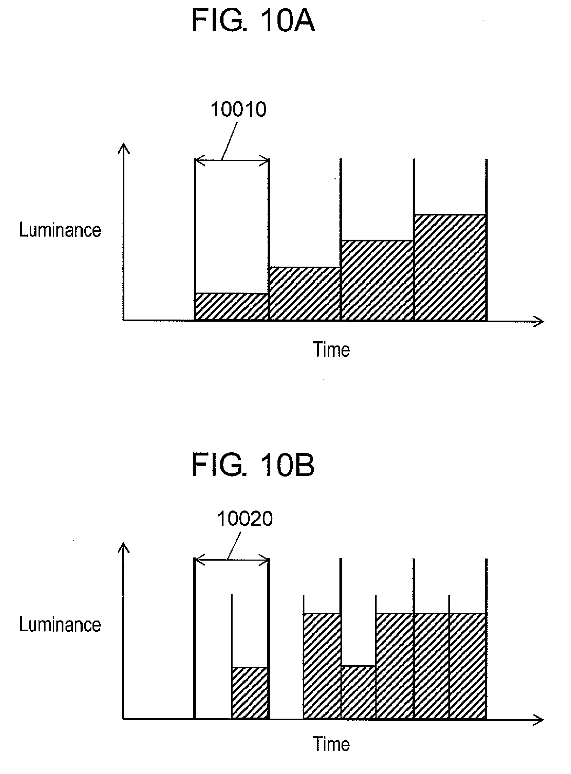

Fig. 10A shows an example of an image signal in conventional driving not according to the above method. Fig. 10B shows an example of an image signal according to the above method. Fig. 9 shows an example of curves of gamma correction made to the respective subframes.

In each of Figs. 10A and 10B, the abscissa axis shows time and the ordinate axis shows luminance. Each of frame cycle 10010 and frame cycle 10020 is approximately 16.6 ms. In this case, the subframe cycle is a half of frame cycle 10020. The diagonal lines show luminance.

In Fig. 9, the abscissa axis shows gray scales before conversion and the ordinate axis shows gray scales after the conversion. The scales of the abscissa axis and the ordinate axis show gray scale values at a gray scale accuracy of 10 bits.

For example, one frame (at 60 Hz) is divided into two subframes (each showing the same image at 120 Hz). Each of the subframes is subjected to conversion according to the characteristics as shown in Fig. 9. The first subframe is converted according to gamma conversion characteristics 9010 and the second subframe is converted according to gamma conversion characteristics 9020. As a result, a signal having a luminance as shown in Fig. 10A is converted into a signal of pseudo-impulse driving as shown in Fig. 10B. However, at a high luminance (as shown in the rightmost frames in the drawing), driving is not changed from conventional driving.

In this prior art, after the frame is divided into subframes, the characteristics conversion is performed by gamma correction. From the conceptual viewpoint, it is also considered that one frame is divided into two subframes according to the characteristics of Fig. 9.

However, in the conventional technique described in Patent Document 1, the shorter period of light emission per frame lowers the emission luminance.

In the conventional technique described in Non-Patent Document 2, decomposition of one frame into a plurality of subframes according to the fixed gamma curves can cause color deviation in some cases. As a result, colors excluded from the signals are added to the proximity to the contours of a halftone moving image.

For example, assume that the maximum gray scale (the maximum value being 1023 at 10 bits) is set at 100 %, and a color like orange pink that has an R signal (red signal) 100 % of the maxim gray scale, a G signal (green signal) 75 % of the maxim gray scale, and a B signal (blue signal) 50 % of the maxim gray scale is displayed. According to gamma conversion characteristics 9010 of Fig. 9, the R signal, the G signal, and the B signal are converted to 100 %, 95.6 %, and 68.4 %, respectively. According to gamma conversion characteristics 9020, the R signal, the G signal, and the B signal are converted to 100%, 42.9%, and 6.4%, respectively. In general, the display characteristics of an image display device with respect to a signal are defined as a 2.2-th power. Thus, when the signals are converted according to gamma conversion characteristics 9010, the light output level of the R signal is 100 %, that of the G signal is 90.6 %, and that of the B signal is 43.3 %. These signals provide a light lemon color. On the other hand, when the signals are converted according to gamma conversion characteristics 9020, the light output level of the R signal is 100 %, that of the G signal is 15.5 %, and that of the B signal is 2.4 %. These signals provide a dark vermillion color.

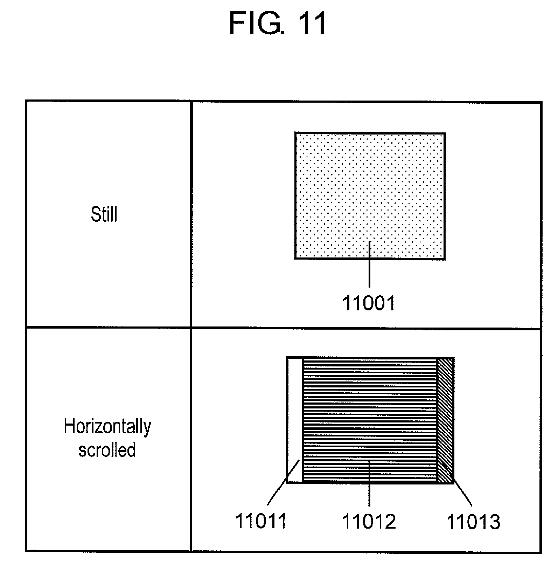

Fig. 11 shows a still image case and a horizontally scrolling case of the above orange-pink image displayed on a black color. When subframes having a double frequency as shown in Fig. 10B are displayed after conversion of Fig. 9, horizontally scrolling orange-pink image 11001 provides an image as shown in Fig. 11. Light lemon color 11011 is added to one of the horizontal contours of pink-orange image 11012, and dark vermillion color 11013 to the other one of the contours. Light lemon color 11011 is visually recognizable in few cases. However, dark vermillion color 11013 is conspicuous and thus considerably affects the image quality level.
[Patent Document 1] Japanese Translation of PCT Publication No. H08-500915
[Non-Patent Document 1] Kurita Taiichiro, "Quality of Displaying Moving Image in Hold-Type Display", Technical Report of IEICE, EID99-10 (1999-06)
[Non-Patent Document 2] Kimura, N., et al., Proc. SID' 05 60.2 pp. 1734 (2005)

### SUMMARY OF THE INVENTION

An image display device includes the following elements: a frame rate converter for converting a frame rate of a supplied image signal and generating a subframe; a gamma gain converter for converting a gamma gain of the subframe, according to the maximum gray scale value of an R signal, a G signal, and a B signal in the subframe; and a liquid crystal display (LCD) driver for displaying an image in response to output from the gamma gain converter.

An image display device includes the following elements: a frame rate converter for converting a frame rate of a supplied image signal and generating a subframe; a gamma converter for converting a gamma gain of the subframe, according to the maximum gray scale value of an R signal, a G signal, and a B signal in the subframe; an LCD driver for displaying an image in response to output from the gamma gain converter; and an RGB level detector for controlling gamma switching of the gamma converter, according to the supplied image signal.

An image display method includes the following steps of: converting a frame rate of a supplied image signal and generating a subframe; converting a gamma gain of the subframe, according to the maximum gray scale value of an R signal, a G signal, and a B signal in the subframe; and displaying an image in response to a signal where the gamma gain has been converted.

An image display method includes the following steps of: converting a frame rate of a supplied image signal and generating a subframe; converting a gamma gain of the subframe, according to the maximum gray scale value of an R signal, a G signal, and a B signal in the subframe; displaying an image in response to a signal where the gamma gain has been converted; and, according to the supplied image signal, detecting an RGB level for controlling gamma switching in the step of converting the gamma gain.

### BRIEF DESCRIPTION OF THE DRAWINGS

Fig. 1 is a block diagram of an essential structure of an image display device in accordance with a first exemplary embodiment and a second exemplary embodiment of the present invention.
Fig. 2 is a detailed block diagram of an internal structure of the image display device of Fig. 1.
Fig. 3 is a detailed block diagram of an internal structure of the image display device in accordance with the second exemplary embodiment of the present invention.
Fig. 4 is a graph showing gain conversion characteristics in accordance with the first exemplary embodiment and the second exemplary embodiment of the present invention.
Fig. 5 is a block diagram of an essential structure of an image display device in accordance with a third exemplary embodiment and a fourth exemplary embodiment of the present invention.
Fig. 6 is a detailed block diagram of an internal structure of the image display device in accordance with the third exemplary embodiment of the present invention.
Fig. 7 is a detailed block diagram of an internal structure of the image display device in accordance with the fourth exemplary embodiment of the present invention.
Fig. 8 is a graph showing gamma conversion characteristics in accordance with the third exemplary embodiment and the fourth exemplary embodiment of the present invention.
Fig. 9 is a graph showing an example of gamma conversion characteristics of a conventional image display device.
Fig. 10A is a diagram for explaining an example of conventional pseudo-impulse driving.
Fig. 10B is a diagram for explaining another example of the conventional pseudo-impulse driving.
Fig. 11 is a diagram for explaining a problem of coloring in contours in the conventional pseudo-impulse driving.

### REFERENCE MARKS IN THE DRAWINGS

- 1100: Frame rate converter
- 1200: Gamma gain converter
- 1230, 1430: Selection circuit
- 1240, 1440: Frame determination part
- 1250: Magnification operation part
- 1260: Separate gain converter
- 1270: Magnification switch part
- 1280: Directly-connected separate gain converter
- 1300: LCD driver
- 1310: LCD panel
- 1320: Driver circuit
- 1400: Gamma converter
- 1410: Separate gamma converter
- 1417: Gamma synchronization switch part
- 1418: Directly-connected separate gamma converter
- 1490: Gamma switch part
- 1500: RGB level detector

### DETAILED DESCRIPTION OF PREFERRED EMBODIMENTS

The present invention provides an image display device that eliminates unnecessary coloring in the contours of a moving image, and has high moving image response performance while maintaining peak luminance.

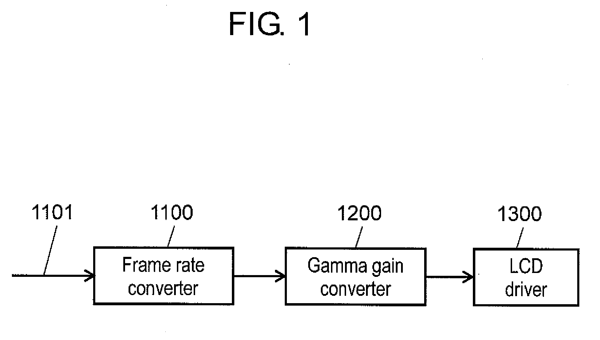

Hereinafter, a description is provided of the first through the fourth exemplary embodiments of the present invention, with reference to Figs. 1 through 10.

The blocks having the same functions in the first through the fourth exemplary embodiments are denoted with the same reference marks.

### FIRST EXEMPRALY EMBODIMENT

Fig. 1 is a block diagram of an essential structure of an image display device in accordance with the first exemplary embodiment of the present invention. With reference to Fig. 1, frame rate converter 1100 converts the frame rate of supplied image signal 1101, from a frame into a subframe having a double frequency, for example. The output of frame rate converter 1100 is fed into gamma gain converter 1200. Gamma gain converter 1200 changes the gain of the signal so that an image to be displayed on a display element has predetermined gamma characteristics. Liquid crystal display (LCD) driver 1300 drives an LCD. The LCD includes a liquid crystal display element, and is an example of a display device.

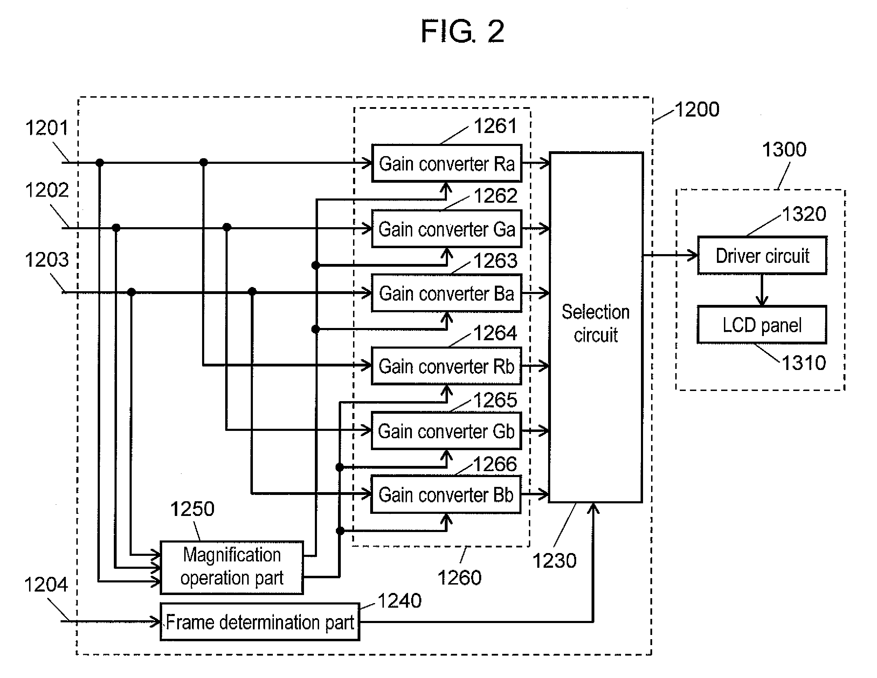

Fig. 2 further details the internal structure of LCD driver 1300 and gamma gain converter 1200 of Fig. 1.

With reference to Fig. 2, driver circuit 1320 is a driver circuit for driving LCD panel 1310, i.e. a display device. Frame determination part 1240 determines from which subframe a data is supplied, according to a synchronization signal or frame information signal 1204, and outputs the result. Magnification operation part 1250 calculates two types of gain magnifications to be applied to subframe signals. Separate gain converter 1260 applies the gain magnifications from magnification operation part 1250 to the supplied subframe signals, and outputs the results. Selection circuit 1230 selects one set from the two sets of the subframe signals multiplied by the two types of gain magnifications from separate gain converter 1260, according to the output from frame determination circuit 1240.

Hereinafter, a further description is provided of the operation, with reference to Figs. 1, 2, 4, 9, 10A and 10B.

In some cases, the image signal is further preprocessed in the previous stage of Fig. 1. However, in this exemplary embodiment, the drawing and the description of the structure of the previous stage are omitted.

Hereinafter, a description is provided of the subframe signals fed into gamma gain converter 1200, with reference to Fig. 2. From frame rate converter 1100 of Fig. 1, a synchronization signal or frame information signal 1204 is supplied together with the subframe signals. These subframe signals include R signal 1201, G signal 1202, and B signal 1203. Frame information signal 1204 is an information signal showing from which subframe a data is supplied when a frame is divided into two subframes. Upon receipt of this synchronization signal or frame information signal 1204, frame determination part 1240 determines from which subframe a data is supplied, and informs selection circuit 1230 of the result.

R signal 1201, G signal 1202, and B signal 1203 fed into gamma gain converter 1200 are fed into magnification operation part 1250 and separate gain converter 1260. Hereinafter, three color signals (i.e. an R signal, a G signal, and a B signal) constituting an image signal are referred to as "RGB".

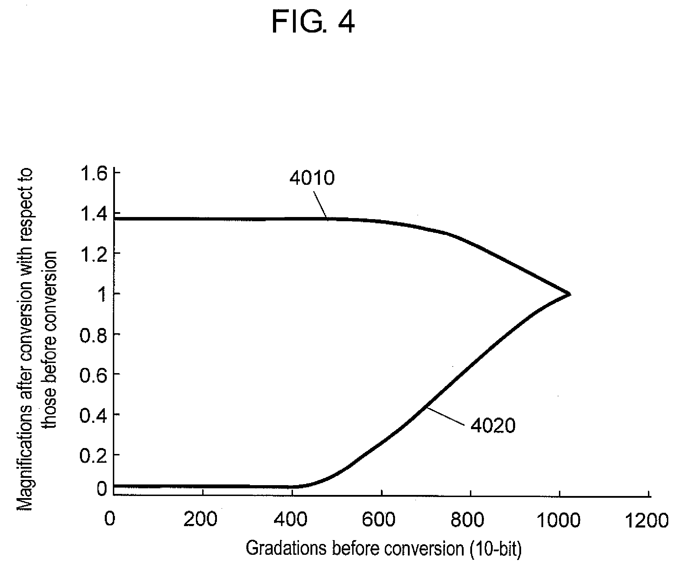

Magnification operation part 1250 calculates gain magnifications to be applied to the subframe signals in separate gain converter 1260, according to the supplied subframe signals. The calculation of gain magnifications is described with reference to Fig. 4.

Fig. 4 is a graph showing magnifications of gray scales after gain conversion in separate gain converter 1260 with respect to those before the conversion. This graph shows that the gain magnifications are determined on the basis of the gray scales before the conversion. In Fig. 4, the abscissa axis shows gray scales before the conversion at a gray scale accuracy of 10 bits. The ordinate axis shows magnifications of gray scales after the conversion with respect to those before the conversion. The conversion characteristics include the following two types: gain characteristics 4010 and gain characteristics 4020. These conversion characteristics are derived from the magnifications of the gray scale values after the conversion with respect to the gray scales before the conversion in the conventional gamma conversion characteristics of Fig. 9.

Magnification operation part 1250 selects the maximum gray scale value of the supplied RGB subframe signals and outputs magnifications corresponding to the selected value. For example, assume that RGB subframe signal levels are 900, 600, and 250, respectively. RGB subframe signal levels of 900, 600, and 250 indicate that the R signal level is 900, the G signal level is 600, and the B signal level is 250. In this case, magnification operation part 1250 outputs two types of magnifications corresponding to the maximum value, i.e. an R signal value of 900. These magnifications are 1.14 according to gain characteristics 4010 and 0.84 according to gain characteristics 4020.

Separate gain converter 1260 applies the gains to the supplied subframe signals, using the information on the two types of gain magnifications from magnification operation part 1250, and outputs two sets of subframe signals.

Selection circuit 1230 selects either one of the two sets of the RGB subframe signals from separate gain converter 1260, according to the determination result of frame determination part 1240. For example, when frame determination part 1240 determines that the data in the first subframe is supplied, selection circuit 1230 selects the first set of the output from separate gain converter 1260 (gain converter Ra 1261, gain converter Ga 1262, and gain converter Ba 1263). When frame determination part 1240 determines that the data in the second subframe is supplied, selection circuit 1230 selects the second set of the output from separate gain converter 1260 (gain converter Rb 1264, gain converter Gb 1265, and gain converter Bb 1266).

In other words, image signals in two subframes each having a cycle equal to a half of that of an image signal in the original one frame (having a frequency of 60 Hz) are subjected to bright and dark gain conversions of Fig. 4, and the converted signals are alternately supplied. Thus, the signals approximating those of the impulse driving in a pseudo manner substantially similar to the conventional example of Fig. 10B are supplied from selection circuit 1230. Further, application of the same magnifications to the three colors can eliminate color deviation between the subframes.

The image signals supplied from selection circuit 1230 are fed into driver circuit 1320 in LCD driver 1300. Driver circuit 1320 drives LCD panel 1310 to display an image on LCD panel 1310.

The drawing and description of backlighting or the like necessary for LCD panel 1310 are omitted.

As a result, this structure allows display approximating that provided by impulse driving, and eliminates the color deviation between the subframes. Thus, any color excluded from the original signals of a moving image is not added to the contours thereof, and an excellent image can be displayed.

### SECOND EXEMPRALY EMBODIMENT

Fig. 1 also shows a block diagram of an essential structure of an image display device in accordance with the second exemplary embodiment of the present invention. The structure of this embodiment is similar to that of the first exemplary embodiment, and the description thereof is omitted.

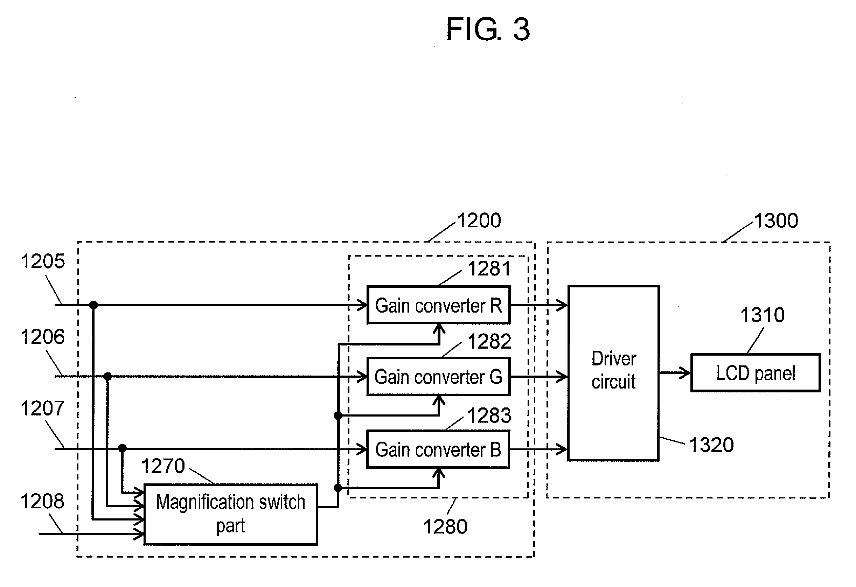

Fig. 3 is a block diagram further detailing the internal structure of liquid crystal display (LCD) driver 1300 and gamma gain converter 1200 in the second exemplary embodiment.

With reference to Fig. 3, driver circuit 1320 drives LCD panel 1310, i.e. a display device. Magnification switch part 1270 determines from which subframe a data is supplied, according to a synchronization signal or frame information signal 1208, and switches the gain magnifications to be applied to RBG subframe signals, according to the subframe signal. Directly-connected separate gain converter 1280 applies a gain to the RGB subframe signals, and outputs the result.

Hereinafter, a description is provided of the operation, with reference to Figs. 1, 3, 4, 9, 10A and 10B. In this exemplary embodiment, the descriptions similar to those of the first exemplary embodiment are omitted and those different therefrom are given.

In some cases, the image signal is further preprocessed in the previous stage of Fig. 1. However, in this exemplary embodiment, the drawing and the description of the structure of the previous stage are omitted.

The subframe signals to be fed into gamma gain converter 1200 include R signal 1205, G signal 1206, and B signal 1207. These RGB subframe signals are fed into magnification switch part 1270 and directly-connected separate gain converter 1280.

A description is provided of the calculation of the gain magnifications to be applied to the subframe signals in directly-connected separate gain converter 1280, with reference to Fig. 4.

Magnification switch part 1270 selects the maximum gray scale value of the supplied RGB subframe signals and alternately outputs two types of magnifications corresponding to the maximum value, according to the order of the subframes.

Directly-connected gain converter 1280 includes gain converter R1281, gain converter G1282, and gain converter B1283. Directly-connected separate gain converter 1280 alternately applies the gains according to the order of the subframes to the supplied subframe signals, using the information on the two types of gain magnifications from magnification switch part 1270, and supplies one set of RGB subframe output at the same time.

In other words, signals in two subframes each having a cycle equal to a half of that of an image signal in the original one frame (having a frequency of 60 Hz) are subjected to bright and dark gain conversions of Fig. 4, and the converted signals are alternately supplied. Thus, the signals approximating those of the impulse driving in a pseudo manner substantially similar to the conventional example of Fig. 10B are supplied from selection circuit 1230. Further, application of the same magnifications to the three colors can eliminate color deviation between the subframes.

The subframe signals supplied from directly-connected separate gain converter 1280 in gamma gain converter 1200 are fed into driver circuit 1320 in LCD driver 1300. Driver circuit 1320 drives LCD panel 1310 to display an image on LCD panel 1310.

The drawing and description of backlighting or the like necessary for LCD panel 1310 are omitted.

As a result, this structure allows display approximating that provided by impulse driving and eliminates the color deviation between the subframes. Thus, any color excluded from the original signals of a moving image is not added to the contours thereof, and an excellent image can be displayed.

### THIRD EXEMPRALY EMBODIMENT

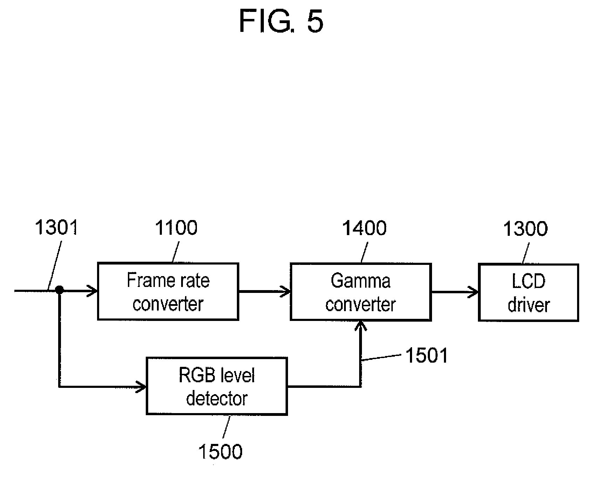

Fig. 5 is a block diagram of an essential structure of an image display device in accordance with the third exemplary embodiment of the present invention. With reference to Fig. 5, image signal 1301 is supplied to frame rate converter 1100. Frame rate converter 1100 converts the frame rate of image signal 1301, from a frame to a subframe having a double frequency, for example. Gamma converter 1400 converts the output of frame rate converter 1100 so that an image to be displayed on a liquid crystal display (LCD) has predetermined gamma characteristics. LCD driver 1300 drives the LCD. The LCD is an example of a display device. RGB level detector 1500 detects the maximum level of the RGB of image signal 1301, and outputs gamma switching signal 1501 to gamma converter 1400.

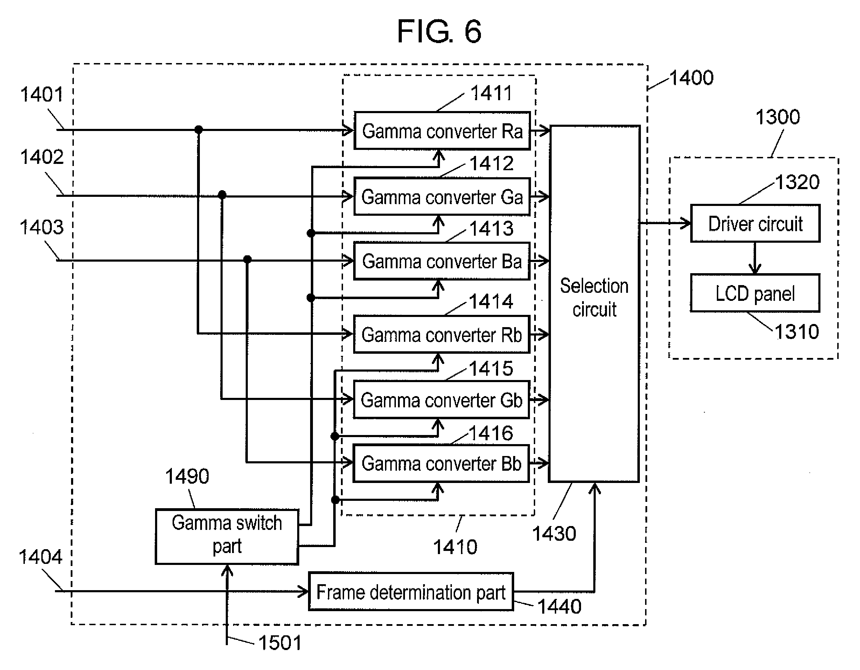

Fig. 6 further details the internal structure of LCD driver 1300 and gamma converter 1400 of Fig. 5.

With reference to Fig. 6, driver circuit 1320 drives LCD panel 1310, i.e. a display device. Frame determination part 1440 determines from which subframe a signal is supplied, according to a synchronization signal or frame information signal 1404, and outputs the result. Under control of gamma switching signal 1501, gamma switch part 1490 calculates or selects two types of gamma conversion tables to be applied to the image signal. Separate gamma converter 1410 gamma-converts the RGB subframe signals using the gamma conversion tables supplied from gamma switch part 1490, and outputs the results. Selection circuit 1430 selects either one of the two sets of the subframe signals from separate gamma converter 1410, according to the result supplied from frame determination part 1440.

Hereinafter, a further description is provided of the operation, with reference to Figs. 5, 6, 8, 9, 10A and 10B.

In some cases, the image signal is further preprocessed in the previous stage of Fig.5. However, in this exemplary embodiment, the drawing and the description of the structure of the previous stage are omitted.

The image signal is also fed into RGB level detector 1500, where the maximum value of the RGB is detected. For example, assume that the RGB subframe signal levels are 900, 600, and 250, respectively. The largest value is an R signal value of 900. RGB level detector 1500 further generates gamma switching signal 1501 corresponding to the maximum level, and controls gamma converter 1400.

Gamma switching signal 1501 varies with the magnitude of the maxim level detected in RGB level detector 1500. A description is provided of the subframe signals fed into gamma converter 1400, with reference to Fig. 6. The elements denoted with the same reference marks as those in Fig. 2 have the same functions, and thus the elements different from those in Fig. 2 are mainly described. From frame rate converter 1100 of Fig. 5, a synchronization signal or frame information signal 1404 is supplied together with the RGB subframe signals. The frame information signal refers to an information signal showing from which subframe a data is supplied when a frame is divided into two subframes. Upon receipt of this synchronization signal or frame information signal, frame determination part 1440 determines from which subframe a data is supplied, and informs selection circuit 1430 of the result.

On the other hand, R signal 1401, G signal 1402, and B signal 1403 fed into gamma converter 1400 are fed into separate gamma converter 1410.

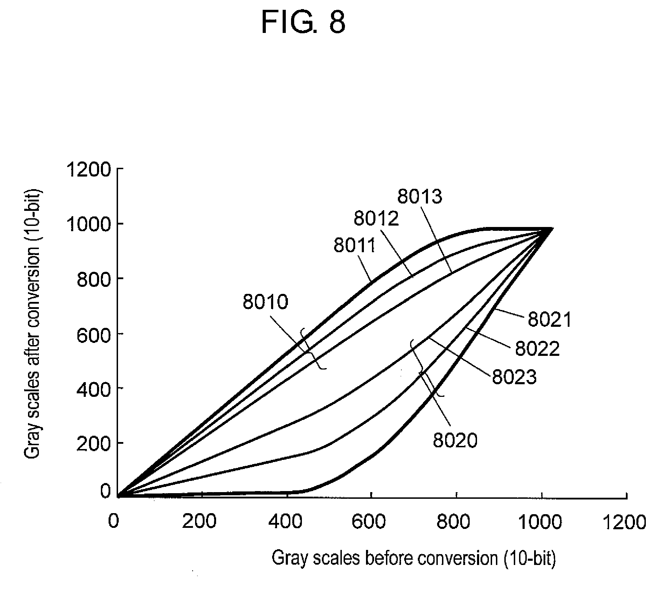

Gamma switch part 1490 switches the gamma conversion characteristics tables to be applied to the image signals in separate gamma converter 1410, according to gamma switching signal 1501 from RGB level detector 1500 of Fig. 5. A description is provided of this switching of gamma conversion characteristics, with reference to Fig. 8.

Fig. 8 is a graph showing characteristics of gray scales after gamma conversion in separate gamma converter 1410 with respect to those before the conversion. In Fig. 8, the abscissa axis shows gray scales before the conversion at a gray scale accuracy of 10 bits. The ordinate axis shows gray scales after the conversion at a gray scale accuracy of 10 bits. The conversion characteristics include the following two types: gamma conversion characteristics (a) 8010, and gamma conversion characteristics (b) 8020. Gamma conversion characteristics (a) 8010 further include gamma conversion characteristics 8011, gamma conversion characteristics 8012, and gamma conversion characteristics 8013 having different conversion levels. Gamma conversion characteristics (b) 8020 include gamma conversion characteristics 8021, gamma conversion characteristics 8022, and gamma conversion characteristics 8023.

As described above, the gamma switching signal varies with the magnitude of the maxim level detected in RGB level detector 1500. Gamma switch part 1490 selects and outputs a gamma conversion characteristics table having the lower conversion level, for a gamma switching signal having the higher maxim level. In Fig. 8, gamma conversion characteristics 8013 and gamma conversion characteristics 8023 are such examples. Inversely, for a gamma switching signal having the lower maxim level, gamma switch part 1490 selects and outputs a gamma conversion characteristics table having the higher conversion level. In Fig. 8, gamma conversion characteristics 8011 and gamma conversion characteristics 8021 are such examples.

Separate gamma converter 1410 gamma-converts the supplied subframe signals using the two types of gamma conversion characteristics tables supplied from gamma switch part 1490, and supplies two sets of RGB subframe output.

Selection circuit 1430 selects either one of the two sets of the RGB output from separate gamma converter 1410, according to the determination result from frame determination part 1440. For example, when frame determination part 1440 determines that the data in the first subframe is supplied, selection circuit 1430 selects the first set of the RBG output from separate gamma converter 1410 (gamma converter Ra 1411, gamma converter Ga 1412, and gamma converter Ba 1413). When frame determination part 1440 determines that the data in the second subframe is supplied, selection circuit 1430 selects the second set of the RBG output from separate gamma converter 1410 (gamma converter Rb 1414, gamma converter Gb 1415, and gamma converter Bb 1416).

In other words, image signals in two subframes each having a cycle equal to a half of that of an image signal in the original one frame (having a frequency of 60 Hz) are subjected to bright and dark gamma conversions of Fig. 8, and the converted signals are alternately supplied. Thus, the signals approximating those of the impulse driving in a pseudo manner substantially similar to the conventional example of Fig. 10B are supplied from selection circuit 1430. Further, the gamma conversion level is lower for an image signal that includes RGB color signals having the higher maxim signal level. Thus, even when one color signal of the RGB signals has a high signal level, the difference between the gamma conversions to be applied to the two subframes is small. As a result, color deviation between the subframes can be eliminated.

The image signals supplied from selection circuit 1430 are fed into driver circuit 1320 in LCD driver 1300. Driver circuit 1320 drives LCD panel 1310 to display an image on LCD panel 1310.

The drawing and description of backlighting or the like necessary for LCD panel 1310 are omitted.

As a result, this structure allows display approximating that provided by impulse driving, and eliminates the color deviation between the subframes. Thus, any color excluded from the original signals of a moving image is not added to the contours thereof, and an excellent image can be displayed.

### FOURTH EXEMPRALY EMBODIMENT

Fig. 5 also shows a block diagram of an essential structure of an image display device in accordance with the fourth exemplary embodiment of the present invention. The structure of this exemplary embodiment is similar to that of the third exemplary embodiment, and thus the description of the structure is omitted.

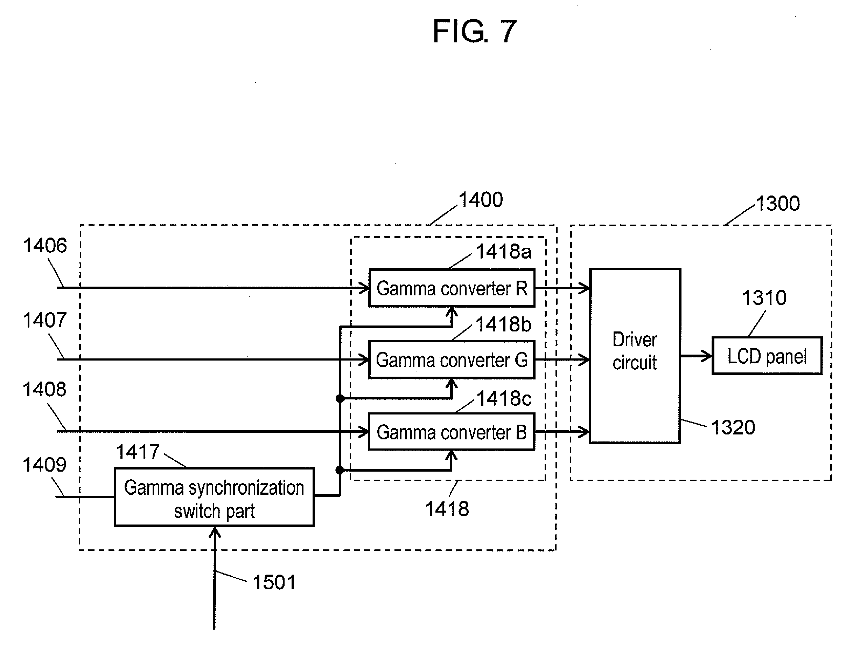

Fig. 7 further details the internal structure of liquid crystal display (LCD) driver 1300 and gamma converter 1400 in the fourth exemplary embodiment.

With reference to Fig. 7, driver circuit 1320 drives LCD panel 1310, i.e. a display device. Gamma synchronization switch part 1417 determines from which subframe a data is supplied, according to a synchronization signal or frame information signal 1409, and switches gamma conversion tables, corresponding to the subframe. Directly-connected separate gamma converter 1418 gamma-converts RGB image signals, using a gamma conversion table from gamma synchronization switch part 1417, and outputs the result.

Hereinafter, a description is provided of the operation, with reference to Figs. 5, 7, 8, 9, and 10.

In some cases, the image signal is further preprocessed in the previous stage of Fig. 5. However, in this exemplary embodiment, the drawing and the description of the structure of the previous stage are omitted.

A description is provided of the subframe image signals fed into gamma converter 1400, with reference to Fig. 7. From frame rate converter 1100 of Fig. 5, a synchronization signal or frame information signal 1409 is supplied together with the RGB subframe image signals. The frame information signal refers to an information signal showing from which subframe a data is supplied when a frame is divided into two subframes. Upon receipt of this synchronization signal or frame information signal 1409, gamma synchronization switch part 1417 determines from which subframe a data is supplied.

On the other hand, the RGB subframe signals fed into gamma converter 1400 are fed into directly-connected separate gamma converter 1418.

Gamma synchronization switch part 1417 switches the gamma conversion characteristics tables to be applied to the image signals in directly-connected separate gamma converter 1418, according to a gamma switching signal from RGB level detector 1500 of Fig. 5. Fig. 8 is a drawing for explaining this switching of gamma conversion characteristics. The description of Fig. 8 is provided in the third exemplary embodiment, and thus is omitted in this exemplary embodiment.

As described above, the gamma switching signal varies with the magnitude of the maxim level detected in RGB level detector 1500. Thus, gamma synchronization switch part 1417 selects and outputs a gamma conversion characteristics table having the lower conversion level, for a gamma switching signal having the higher maxim level. In Fig. 8, gamma conversion characteristics 8013 and gamma conversion characteristics 8023 are such examples. Inversely, for a gamma switching signal having the lower maxim level, gamma synchronization switch part 1417 selects and outputs a gamma conversion characteristics table having the higher conversion level. In Fig. 8, gamma conversion characteristics 8011 and gamma conversion characteristics 8021 are such examples. As described above, upon receipt of a synchronization signal or a frame information signal, gamma synchronization switch part 1417 determines from which subframe a data is supplied, and alternately outputs two types of tables including gamma conversion characteristics (a) 8010 and gamma conversion characteristics (b) 8020, according to the order of the subframes. For example, gamma conversion characteristics 8011 is supplied for the first subframe and gamma conversion characteristics 8023 is supplied for the second subframe.

Directly-connected gamma converter 1418 gamma-converts the supplied subframe signals, alternately using the two types of gamma conversion characteristics tables supplied from gamma synchronization switch part 1417, according to the order of the subframes, and supplies one set of RGB subframe output at the same time.

In other words, image signals in two subframes each having a cycle equal to a half of that of an image signal in the original one frame (having a frequency of 60 Hz) are subjected to bright and dark gamma conversions of Fig. 8, and the converted signals are alternately supplied. Thus, the signals approximating those of the impulse driving in a pseudo manner substantially similar to the conventional example of Fig. 10B are supplied. Further, the gamma conversion level is lower when the maxim signal level of an R signal, a G signal, and a B signal is higher. Thus, even when one color signal has a high signal level, the difference between the gamma conversions to be applied to the two subframes is small. As a result, color deviation between the subframes can be eliminated.

The image signals supplied from directly-connected separate gamma converter 1418 in gamma converter 1400 are fed into driver circuit 1320 in LCD driver 1300. Driver circuit 1320 drives LCD panel 1310 to display an image on LCD panel 1310.

The drawing and description of backlighting or the like necessary for LCD panel 1310 are omitted.

As described above, in the present invention, a frame is divided into subframes, and different gamma corrections are made to the respective subframes. Such corrections cause luminance information to be biased on one of the subframes. Thus, even at display approximating that provided by impulse driving in a pseudo manner, no color deviation occurs between the divided two frames (subframes). Such operation can offer a remarkable advantage of eliminating coloring in the contours of a moving halftone image while maintaining the white peak.

As a result, this operation allows display approximating that provided by impulse driving, and eliminates the color deviation between the subframes. Thus, any color excluded from the original signals of a moving image is not added to the contours thereof, and an excellent image can be displayed.

### INDUSTRIAL APPLICABILITY

The image display device of the present invention has a remarkable advantage of improving the quality level of images without sacrificing the quality of moving images. The image display device is particularly useful as a display device in a television receiver or the like in which displaying moving images is important.

## Claims

1. An image display device comprising:
a frame rate converter for converting a frame rate of a supplied image signal and generating a subframe;
a gamma gain converter for converting a gamma gain of the subframe according to a maximum gray scale value of an R signal, a G signal, and a B signal in the subframes; and
a liquid crystal display (LCD) driver for displaying an image in response to output from the gamma gain converter.

2. The image display device of claim 1, wherein the gamma gain converter performs the same gamma gain conversion on the R signal, the G signal, and the B signal in the same subframe.

3. The image display device of any one of claims 1 and 2, wherein the gamma gain converter further includes:
a separate gain converter for separately applying a gain to the R signal, the G signal, and the B signal in the subframe;
a magnification operation part for outputting a magnification according to the subframe, and controlling the separate gain converter;
a frame determination part for determining the subframe according to at least one of a synchronization signal and a frame information signal; and
a selection circuit for selecting output from the separate gain converter and supplying it to the LCD driver, under control of the frame determination part.

4. The image display device of any one of claims 1 and 2, wherein the gamma gain converter further includes:
a directly-connected separate gain converter for separately applying a gain to the R signal, the G signal, and the B signal in the subframe, and supplying it to the LCD driver; and
a magnification switch part for determining the subframe according to at least one of a synchronization signal and a frame information signal, and switching a gain magnification in the directly-connected separate gain converter.

5. An image display device comprising:
a frame rate converter for converting a frame rate of a supplied image signal and generating a subframe;
a gamma converter for converting a gamma gain of the subframe according to a maximum gray scale value of an R signal, a G signal, and a B signal in the subframe;
an LCD driver for displaying an image in response to output from the gamma converter; and
an RGB level detector for controlling gamma switching of the gamma converter, according to the supplied image signal.

6. The image display device of claim 5, wherein the gamma converter performs the same gamma conversion on the R signal, the G signal, and the B signal in the same subframe.

7. The image display device of any one of claims 5 and 6, wherein the gamma converter further includes:
a separate gain converter for separately applying a gain to the R signal, the G signal, and the B signal in the subframe;
a gamma switch part for selecting a gamma conversion table to be used in the separate gain converter, under control of the RGB level detector;
a frame determination part for determining the subframe according to at least one of a synchronization signal and a frame information signal; and
a selection circuit for selecting output from the separate gain converter and supplying it to the LCD driver, under control of the frame determination part.

8. The image display device of any one of claims 5 and 6, wherein the gamma gain converter further includes:
a directly-connected separate gain converter for separately applying a gain to the R signal, the G signal, and the B signal in the subframe, and supplying it to the LCD driver; and
a gamma synchronization switch part for determining the subframe according to at least one of a synchronization signal and a frame information signal, and switching a gamma conversion table to be used in the directly-connected separate gain converter.

9. An image display method comprising:
converting a frame rate of a supplied image signal and generating a subframe;
converting a gamma gain of the subframe according to a maximum gray scale value of an R signal, a G signal, and a B signal in the subframe; and
displaying an image in response to a signal where the gamma gain has been converted.

10. The image display method of claim 9, wherein in the converting the gamma gain, the same gamma conversion is performed on the R signal, the G signal, and the B signal in the same subframe.

11. An image display method comprising:
converting a frame rate of a supplied image signal and generating a subframe;
converting a gamma gain of the subframe according to a maximum gray scale value of an R signal, a G signal, and a B signal in the subframe;
displaying an image in response to a signal where the gamma gain has been converted; and
according to the supplied image signal, detecting an RGB level for controlling gamma switching in the converting the gamma gain.

12. The image display method of claim 11, wherein, in the converting the gamma gain, the same gamma gain conversion is performed on the R signal, the G signal, and the B signal in the same subframe.
